(19) Europäisches Patentamt

European Patent Office

Office européen des brevets

(11) **EP 1 468 211 B1**

(12) **EUROPEAN PATENT SPECIFICATION**

(45) Date of publication and mention
of the grant of the patent:
**06.12.2006 Bulletin 2006/49**

(51) Int Cl.:
**F16H 63/20** (2006.01)

(21) Application number: **03731713.8**

(86) International application number:
**PCT/EP2003/000722**

(22) Date of filing: **24.01.2003**

(87) International publication number:
**WO 2003/062677 (31.07.2003 Gazette 2003/31)**

(54) **GEAR SHIFTING CASSETTE SYSTEM**

GANGSCHALTKASSETTENSYSTEM

SYSTEME DE CASSETTE DE CHANGEMENT DE VITESSE

(84) Designated Contracting States:
**DE FR GB IT SE**

(30) Priority: **25.01.2002 GB 0201657**

(43) Date of publication of application:
**20.10.2004 Bulletin 2004/43**

(73) Proprietor: **Eaton Corporation
Cleveland,
Ohio 44114 (US)**

(72) Inventor: **HEATHCOTE, Ian
Stoke on Trent,
Staffordshire ST8 6HP (GB)**

(74) Representative: **Rüger, Barthelt & Abel
Patentanwälte
Webergasse 3
73728 Esslingen (DE)**

(56) References cited:
**EP-A- 0 413 047          EP-A- 0 737 827
EP-A- 0 961 055          US-A- 5 566 579**

## Description

The invention relates to a gear shifting cassette unit for a gear shifting mechanism, to a gear shifting assembly, and to a transmission having a gear shifting assembly.

Background of the invention

Gear shifting assemblies for mechanical change gear transmissions comprising a plurality of generally parallel, independently axially movable shift rails to be selected and axially moved to effect engagement/ disengagement of a particular gear ratio, are well known in the prior art, as may be seen by reference to US Patents Nos. 2,951,392; 4,455,883; 4,515,029; 4,567,785; 4,584,895 and 4,104,929.

Typically, such gear shifting assemblies include a shift finger fixed to a directly mounted shift lever or to a cross shaft of a remotely controlled shifting mechanism. Interlock mechanisms are usually provided to prevent movement of more than one shift rail at a time from the axially centered or neutral positions thereof. The cross shaft of the remotely controlled shifting mechanism extends across the shift bars. For selecting a shift rail, the cross shaft is axially moved in X-X direction (cross-gate travel). For axially moving the shift rail, selected by the shift finger of the cross shaft, the cross shaft is rotated (into gear direction or Y-Y direction). Hence, a X-Y type shifting mechanism is formed.

The cross shaft may be driven by electric motors, pneumatic or hydraulic actuators or cables.

Different original equipment manufactures (OEMs) often require different performances from their selector mechanisms. In particular, the operating forces, the biasing of the shift levers, and the lengths of the shift travels tend to vary. This is especially true in view of different shift bar housings envisaged by the customer. Depending upon the basic principle of the X-Y controller, the performance of the selector mechanisms may vary. This results in a large number of variations in the designs of the transmissions and their selector mechanisms. EP-A 0 413 047 discloses a change gear transmission shifting mechanism in the form of a pre-assembled unit that is housed in a cover, said cover being adapted to be mounted on the transmission casing. The shifting mechanism comprises a shifting shaft that extends across the shift rails of the transmission when said pre-assembled unit is mounted on the transmission casing. A somewhat similar configuration of a shift housing secured to the upper portion of the transmission casing is disclosed in US-A 5,566,579.

## Summary of the Invention

It is an object of the invention to simplify the assembly of transmissions and to reduce the number of variance of transmissions, that have to be built and that have to be stocked.

This object is attained by the characteristics of claim 1, by providing a drop-in cassette unit.

The shifting cassette unit according to the invention is provided for a gear shifting mechanism for shifting a gear changing transmission with several axially movable shift rails. The latter have connecting members, for example in the form of cutouts, which can be engaged by a shifting element, for example a shift finger. An actuation unit is furthermore a part of the gear shifting mechanism in the form of an X-Y drive. The actuation unit should be mounted on an opening in the transmission housing and has a shift finger, which can be moved in the Y-Y direction, as well as in the X-X direction. The cassette of the invention should be arranged between the shift rails and the actuation unit for example. The cassette unit has a carrier member, which supports a shifting element. The latter engages the connecting elements of the shift rails in order to select and displace them. On the other end, the shift finger engages the carrier member, which thereupon is itself moved by the shift finger. Thus, the shift finger no longer directly enters into the shift rails, or their connecting elements (cutouts), but into the cassette unit.

Because of this it becomes possible to perform a large portion of the adaptations, which become necessary in connection with a transmission in regard to different X-Y actuation units, by selecting appropriate cassettes. This relates, for example, to the shape of the shift finger, its size and the length of its traversing movements in the X-X direction and in the Y-Y direction, the length of the shift finger, and the like. Different actuation units can work together with the same shift fingers, wherein the cassette acts as an adapter module. When producing different transmission types it is therefore possible to omit the adaptation of the actual transmission to various requirements regarding the X-Y gear shifting unit, i.e. in the individual case the adaptation is limited to the selection of the respectively adapted cassette unit.

The cassette units can be exchanged in a simple way, so that existing transmissions can also be adapted later, i.e. in the completely mounted state, to different tasks or types of employment. An opening is provided in the transmission housing, through which the shift rails can be accessed. As a rule, the X-Y gear shifting mechanism operates through this opening. With the present invention, the cassette unit in accordance with the invention is simply attached to the opening, or is inserted into this opening.

Particularly simple adaptation and maintenance is made possible if the cassette unit has a flange as the fastening means, which is maintained at the edge of the transmission housing opening. For example, the flange can be clamped between the X-Y gear shifting mechanism and the transmission housing.

The cassette unit contains a traversing member, which is guided by a corresponding guidance device, for example a linear guidance device, in the X-X direction. Guide surfaces of the cassette housing can be used for this. This results in a simple construction. The traversing member has a guidance device for the carrier member. The guidance device can be, for example, a linear guidance device in the form of an elongated opening oriented in the Y-Y direction. The carrier member is then seated in this opening, and has, on its side facing the shift rails, one or several projections as shift elements, and, on its side remote from the shift rails, a coupling element for connecting the shift finger. The coupling element is constituted, for example, by two projections or prongs of the carrier member located in the slit of the traversing member, between which the shift finger can enter. The latter moves the carrier member in the Y-Y direction by resting against the prongs of the carrier member and, by resting against the flanks of the oblong opening in which the prongs are seated, moves the traversing member in the X-X direction.

The traversing element can be provided with a blocking device in order to dependably prevent erroneous actuations of the transmission. The blocking element can be used in particular to prevent more than one shift rail being moved out of its neutral position at one time. The blocking element is preferably fixedly connected with the traversing member. For example, it is embodied as an oblong protrusion or rib, which enters into cutouts of the shift rails through an opening in the cassette housing.

The cassette can contain further elements required for customizing the transmission. These are, for example, a biasing device, which sets a preferred X-X position of the traversing member. The desired spring forces and characteristic spring curves are therefore preset in the cassette in accordance with his requirements. They can be changed by changing the cassette. Furthermore, means for limiting the path of the gear shifting elements can be provided in the cassette. For example, the path in the X-X direction can be limited by appropriate detent elements. In this respect, customizing of the transmission again takes place merely by changing cassettes.

If a particularly short shifting path is desired, in particular in the X-X direction, something which can often be the case with manually shifted transmissions, the gear shifting mechanism preferably has two tongues, which are intended to engage the shift rails. The shift rails are arranged in pairs next to each other, wherein pairs of shift rails are arranged at somewhat greater distances from each other. In this case the distances of the shift rails and of the tongues are matched to each other in such a way, that a tongue can respectively only select one of a pair of shift rails among the shift rails. The respectively other shift rail is then located in a space between tongues. However, the fork formed by the tongues is so narrow that only one shift rail of adjoining pairs of shift rails can be selected, wherein the respectively other tongue then always projects into the space between the pairs of shift rails.

Further details of advantageous embodiments of the invention ensue from the remaining dependent claims, the drawings or the description.

Brief Description of the Drawings

Fig. 1 illustrates a gear shifting assembly in a lateral view,

Fig. 2 shows the gear shifting assembly in Fig. 1 in a partially exploded view,

Fig. 3 shows the gear shifting assembly in Figs. 1 and 2 in a basic representation,

Fig. 4 is a perspective representation of the transmission housing of the gear shifting assembly in Figs. 1 and 2,

Fig. 5 gear shifting mechanism,

Fig. 6 is a perspective representation of the cassette unit,

Figs. 7 to 10 show the cassette unit in cross-sectional representations in several selection positions, and

Fig. 11 is a perspective representation of a shift rail of the gear shifting mechanism in Fig. 5.

Description of the Preferred Embodiment

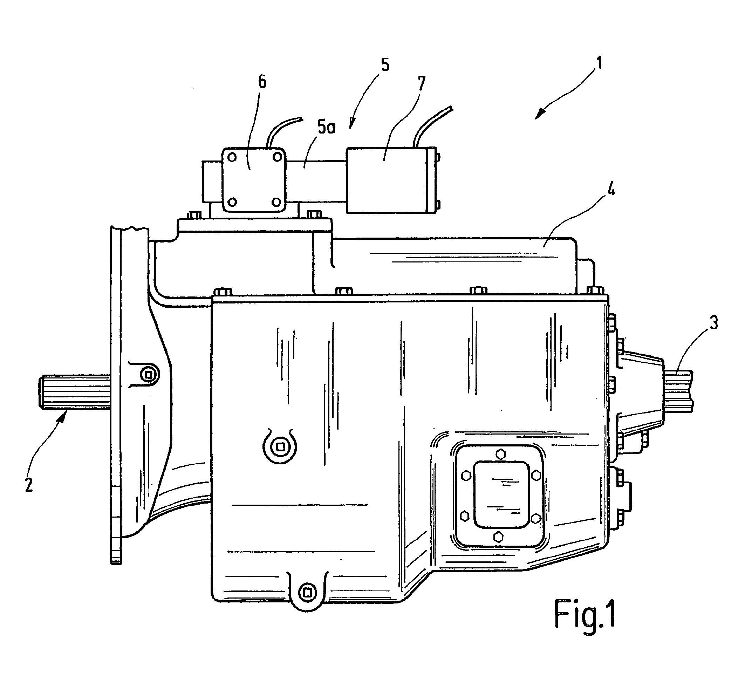

A transmission 1 with an input shaft 2, an output shaft 3 and a transmission housing 4 is represented in Fig. 1. An X-Y actuation unit 5 is provided on the transmission housing 4 which has, for example, an electric motor 6 as the X drive, and an electric motor 7 as the Y drive. The actuation unit 5 has a housing 5a, which is screwed together with the transmission housing. However, in place of the electrical X-Y actuation unit 5 it is possible to provide a shifting tower, which has a shift lever seated pivotally in the X direction and the Y direction and is directly connected with the shift finger.

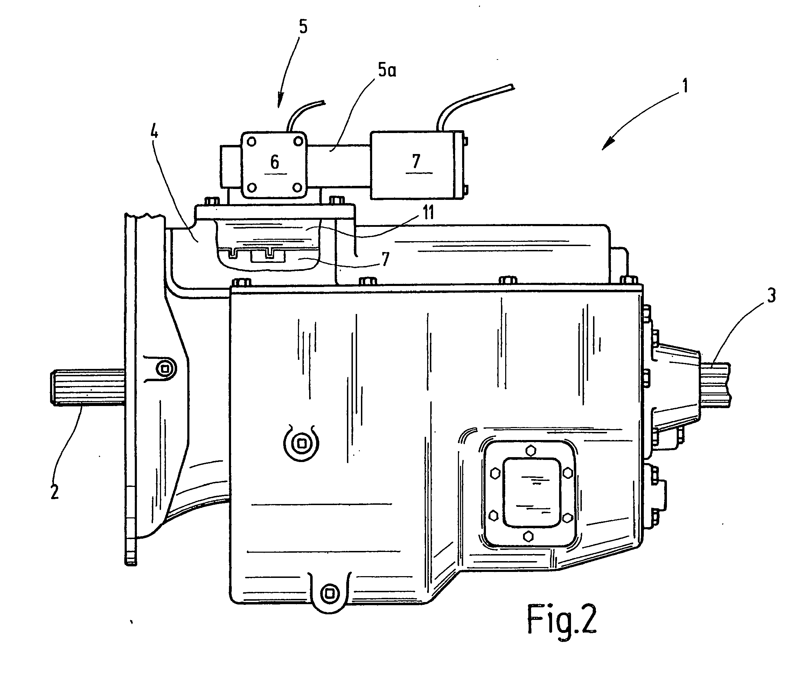

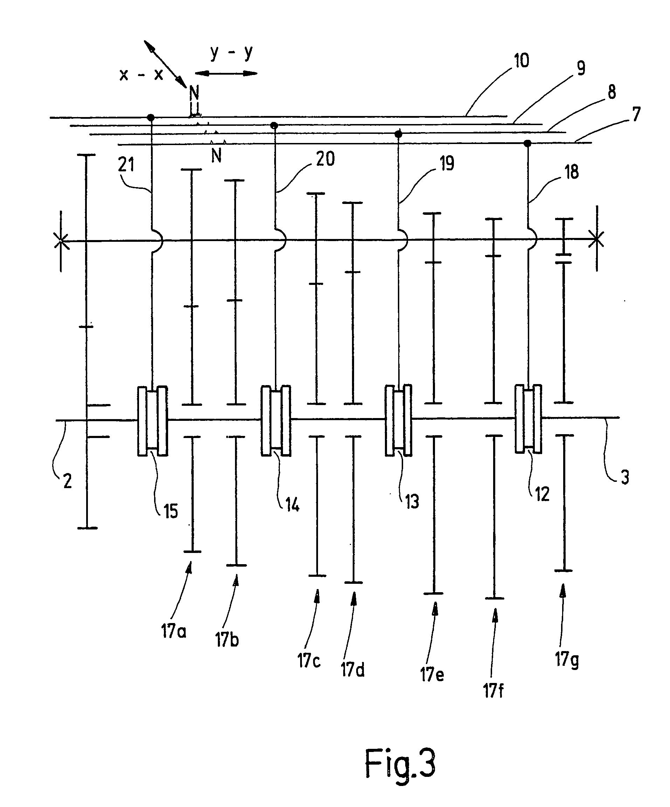

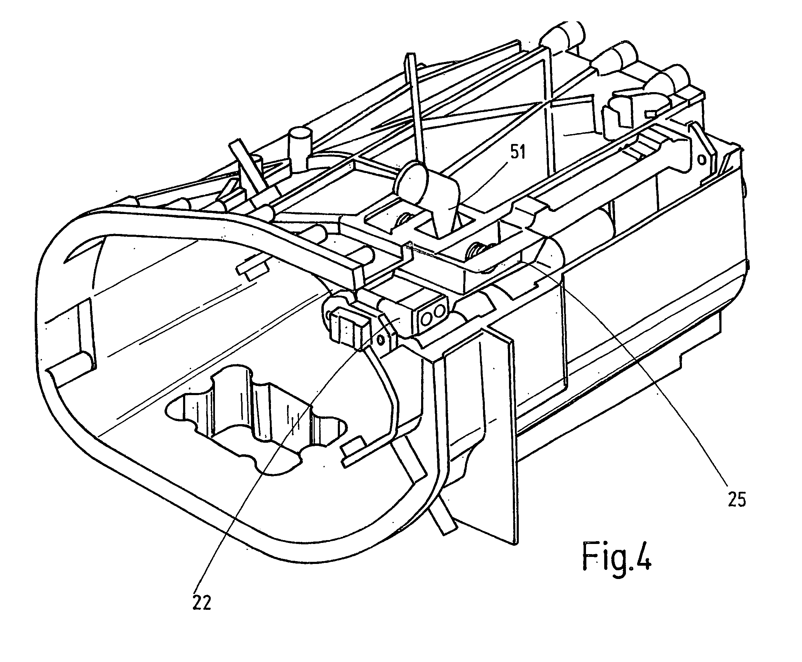

Fig. 2 illustrates the gear 1 in accordance with Fig. 1, wherein a portion of the transmission housing 4 below the actuation unit 5 is cut open. A shift rail 7 is visible through the opening. Further shift rails 8, 9, 10 can be seen in the schematic representation in accordance with Fig. 3 and the perspective representation in accordance with Fig. 4.

As can be seen from Figs. 2 and 4, a cassette unit 11 is provided between the shift rails 7, 8, 9, 10 and the actuation unit 5, which is used to match the actuation unit with the shift rails 7, 8, 9, 10.

As shown in Fig. 3, the shift rails 7, 8, 9, 10 are used for actuating clutches 12, 13, 14, 15 in order to activate sets of gear wheels 17a, 17b, 17c, 17d, 17e, 17f, 17g, which are parts of different gears, or alternatively to provide a direct drive connection between the output shaft 3 and the input shaft 2. To this end, the shift rails 8, 9, 10 each have at least one shift fork 18, 19, 20, 21. The shift forks 18, 19, 20, 21 position the respective clutches 12, 13, 14, 15 alternatively in a center neutral position or in a right position, in which they couple the gear wheel respectively on the right with the output shaft 3, or in a position displaced completely to the left, in which they couple the gear wheel respectively adjoining at the left (or the input shaft in case of the clutch 15) with the output shaft 3. The direction of movement of the clutches 12, 13, 14, 15 matches the axial direction of the shift rails 7, 8, 9, 10, and is identified as the Y-Y direction. The direction transversely to the shift rails 7, 8, 9, 10 is designated the X-X direction.

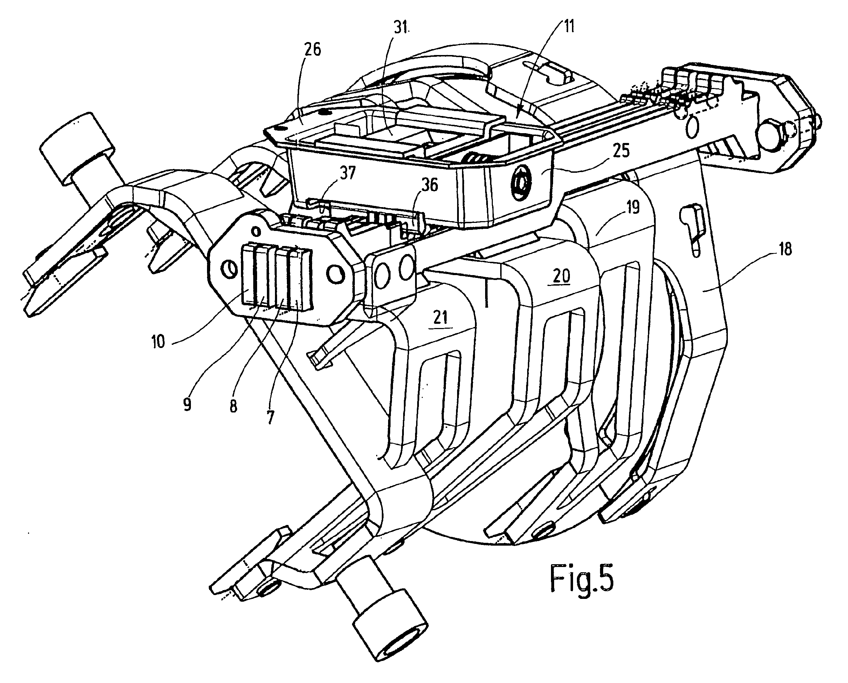

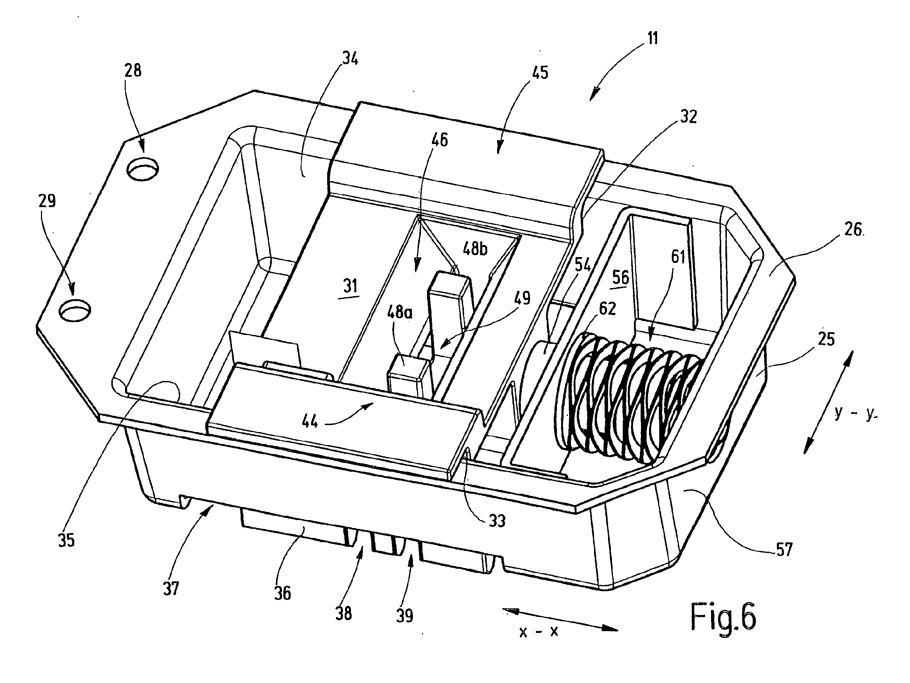

At its top, or if required at another surface, the transmission housing 4 has an opening 22, which adjoins the shift rails 7, 8, 9, 10. As can be seen in Figs. 5 and 6, the cassette unit 11 is seated in this opening 22. Therefore the cassette unit 11 is to be inserted into a gear shifting mechanism 24 constituted by the actuation unit 5, the shift rails 7, 8, 9, 10 and the shift forks 18, 19, 20, 21. The cassette unit 11 has a flat, shell-like housing 25, approximately rectangular in a view from above, whose outer contour matches the contour of the opening 22. The housing 25 is provided with a circumferential flange-like edge 26, which rests on a corresponding contact surface 27, which surrounds the opening 22 of the transmission housing 4. For positioning the cassette unit 11, the edge 26 can be provided with one or several positioning openings 28, 29, to which corresponding alignment pins are assigned.

A traversing element 31 is arranged in the housing 25, which is seated displaceably in the X-X direction. For this purpose, the traversing element 31 has two guide faces 32, 33, which slide on corresponding inner surfaces 34, 35 of the housing 25 and are guided by it in this way. The maximum distance the traversing element 31 can travel is greater than, or at least as great, as is necessary for reaching all shift rails 7, 8, 9, 10.

A rib 36 extending in the X-X direction is provided on the underside of the traversing element 31, which projects through a corresponding slit-like opening 37 in the underside of the cassette housing 25. In the X-X direction, the opening 37 is longer than the rib 36 by the maximum traverse of the traversing element 31. The rib 36 is used to unblock and to block individual shift rails, and for this purpose has at least one, but preferably two cutouts 38, 39.

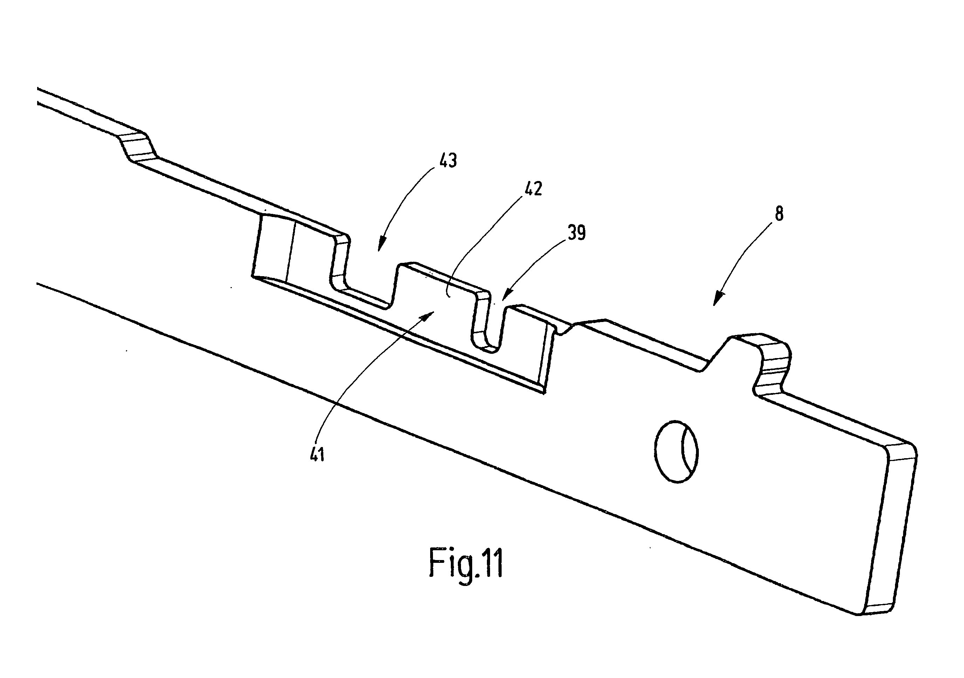

The rib 36 engages cutouts 39 provided in the shift rails. To make this clear, the shift rail 8 is separately illustrated in Fig. 11. The shift rail 7 is embodied mirror-reversed in respect to the shift rail 8. Both constitute a shift rail pair 7, 8 of closely spaced shift rails. A further shift rail pair is arranged at a somewhat greater distance from this shift rail pair and is constituted by the two shift rails 9, 10, which are embodied mirror-reversed in respect to each other. The shift rail 10 matches the shift rail 8. As made clear in Fig. 11, the shift rail 8 has a lateral flat section or cutout 41, in whose area the width of the shift rail 8 is reduced. The cutout 39, as well as a further, distanced cutout 43, which is used as connecting member, by means of which the shift rail is selected and actuated by a shift element, pass through a remaining wall area 42.

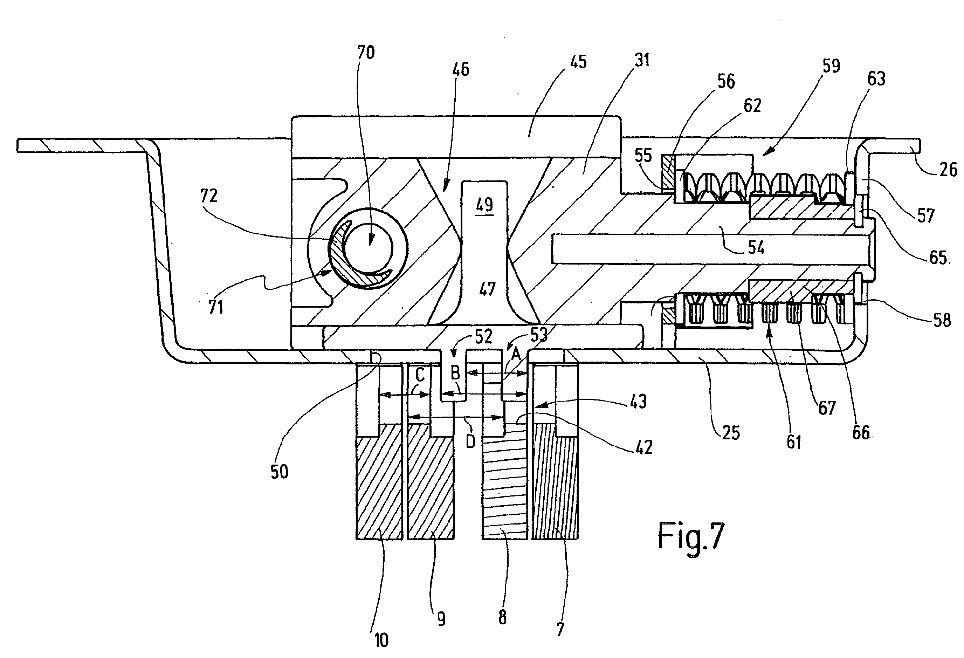

As can be seen in Fig. 6, the traversing element 31 has two wings 44, 45, which extend over the edge 26 and can glide on the edge 26. A slit 46 extending in the Y-Y direction is formed between the wings 44, 45, which widens in a funnel shape toward the top. The slit 46 is used for seating a carrier member 47, which can be seen in Fig. 7 in particular. It has two vertically projecting prongs 48a, 48b (Fig. 6), between which the shift finger 51, seen in Fig. 4, of the actuation unit 5 extends. Therefore the prongs 48a, 48b, together with the lateral flanks of the slit 46, constitute a coupling 49 for moving the carrier member 47 in a manner corresponding to the movements of the shift finger 51.

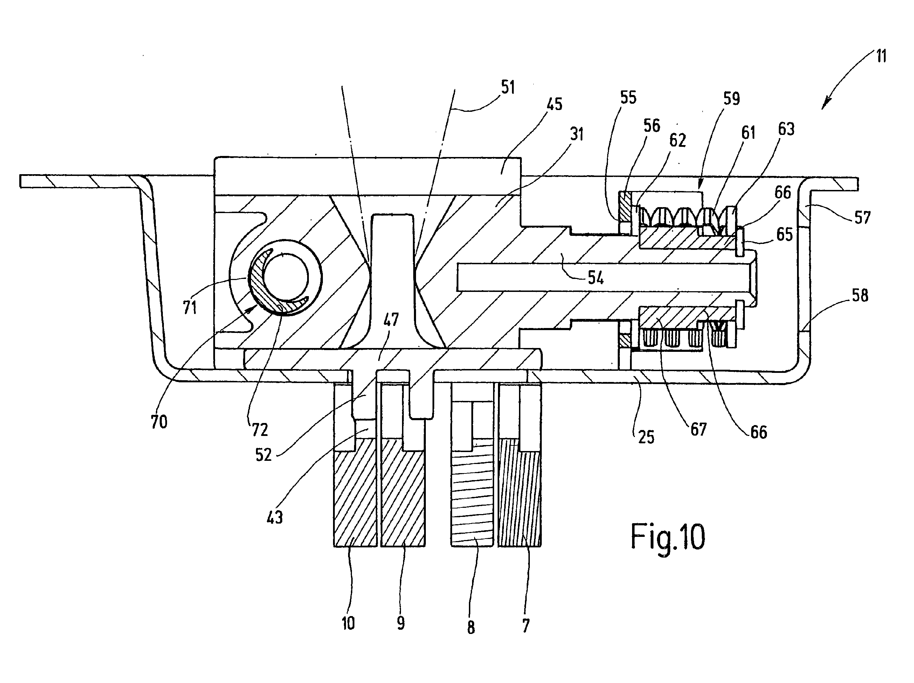

The carrier member 47, which can be moved in the Y-Y direction in respect to the traversing element 31, has two tongue-like extensions 52, 53 on its underside, which project away from the carrier member 47 at right angles in respect to the X-X direction and to the Y-Y direction. As illustrated in Figs. 7 to 10, the extensions 52, 53 here project into the cutouts 43 of the shift rails 7, 8, 9, 10. As further illustrated in Fig. 7, the lateral spacing of the cutouts 43, the lateral spacing of the extensions 52, 53, and the spacing between the wall areas 42 of adjoining shift rails 7, 8, 9, 10 are matched to each other in the following way:

$$A > C,$$

and

$$B < D,$$

wherein A is the sum of the width of the space between the extensions 52 and 53 and the width of one extension,

B = the total width of the fork formed by the extensions 52 and 53, i.e. the distance between the outer surfaces, facing away from each other, of the extensions 52, 53 (Fig. 7),

C = the outer spacing between two adjoining interlocking elements constituted by the cutouts 43, i.e. the distance between the surfaces, facing away from each other, of the wall areas 42 and the shift rail pairs 9, 10, or 7, 8, and

D = the spacing of the outsides, facing in the same direction, of shift rails 8, 9 arranged at a greater spacing.

As can be further seen in Figs. 5 to 10, the traversing element 31 is provided with a pin 54 extending in the X-X direction and projecting through an appropriate opening 55 in an intermediate wall 56 of the housing 25. A section 57 of the housing 25 aligned parallel with the intermediate wall 56 is also provided with an opening 58, through which the pin 54 can pass when the element 31 is appropriately displaced.

A spring biasing device 59 arranged on the pin 54 is maintained in the space formed between the intermediate wall 56 and the section 57. Part of this is a compression spring 61, for example in the form of a helical spring or of a plate spring package. The compression spring is maintained between two pressure disks 62, 63, seated on the pin 54. Here, the pressure disk 62 rests against an appropriate annular shoulder 64 of the pin 54, while the pressure disk 63 rests against a snap ring 65, which has been inserted into a corresponding groove at the free end of the pin 54. In this case the distance between the snap ring 65 and the annular shoulder 64 essentially corresponds to the distance between the intermediate wall 56 and the section 57.

The pin 54 moreover supports a traversing limit sleeve 66, which has a cylinder area 67 of increased diameter, which fits neither through the opening of the pressure disk 62 nor through the opening of the pressure disk 63.

While the spring biasing device 59 is used for setting a preferred position of the traversing element 31, a further spring biasing device 70 can be provided which, for example, is used for forming a perceptible obstacle, in particular for selecting one of the shift rails 7 or 10 located at the edges. Such an obstacle can be desirable if, for example, the respective shift rail is exclusively assigned to the reverse gears, and the selection of the same is intended to be permitted only by means of an intentional overcoming of a perceptible obstacle. The spring biasing device 70 can be constituted by a bore 71, which extends transversely to the X-X direction, and in which a spring element 72, for example in the form of a compression spring, is seated. The latter can bias a detent element, for example a detent projection or a detent ball, in a direction out of the bore 71. In this case a protrusion can be formed on the guide surface 34 or 35 which, when the element 31 has been moved correspondingly far, represents an obstacle which must be overcome by force and pushes the detent element into the bore 71.

The transmission 1 so far described operates as follows:

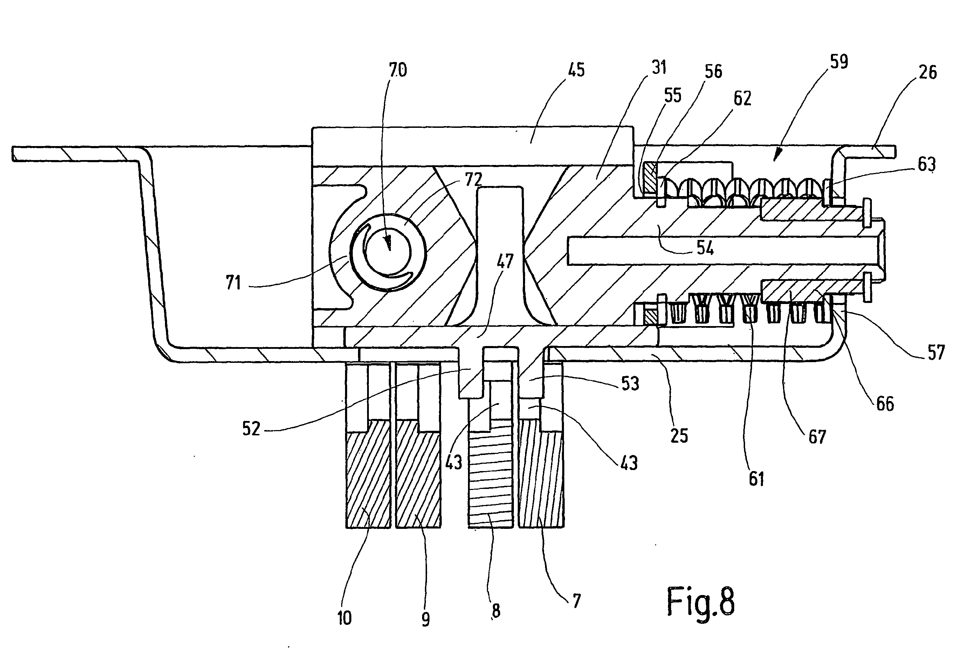

During operation, the actuation unit 5 first moves the shift finger 51 in the X-X direction for selecting a desired shift rail. In the course of this, the shift finger 51 (Figs. 4 and 5) displaces the traversing element 31, which in turn takes the carrier member 47 along. Because of this, the extensions 52, 53 move along the course formed by the cutouts 43. In the position of rest (Fig.7), the shift rail 8 is selected. If the shift rail 7 is to be selected, the shift finger 51 displaces the element 31 toward the right into the position illustrated in Fig. 8. There, the area 67 of the sleeve 66 comes to rest via the pressure disk 63 on the section 57 of the housing 25. The extension 53 is completely located within the cutout 43, while the extension 52 has not yet reached the cutout 43 of the shift rail 8. Now, a movement of the shift finger in the Y-Y direction causes an axial displacement of the shift rail 7, while all other shift rails 8, 9, 10 remain in their neutral position. They are moreover arrested in their neutral position by the rib 36. The opening 38 in the rib 36 only unblocks the shift rail 7.

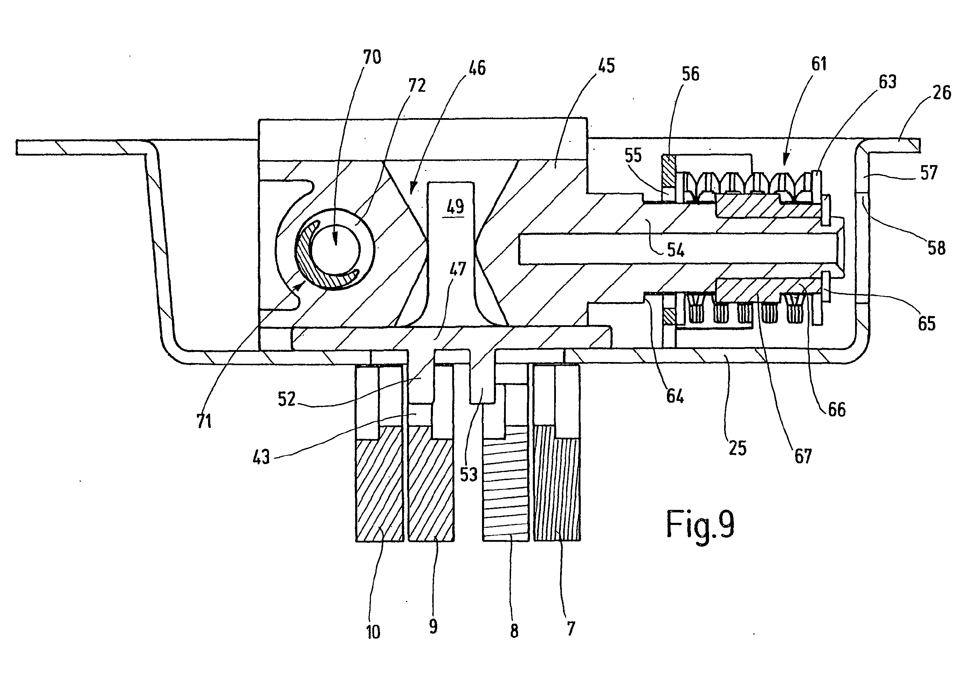

If, however, the shift rail 9 is to be selected, the element 31 is moved toward the left in accordance with Fig. 9 against the force of the compression spring 61, which is now supported on the intermediate wall 56 and is biased against the pressure disk 63, until the extension 52 has entered into the cutout 43 of the shift rail 9. Now the shift rail 9 is the only one selected and unblocked shift rail. All other shift rails 7, 8, 10 are arrested by the rib 36. Now the carrier member 46 is displaced in the Y-Y direction by means of a Y-Y movement of the shift finger, so that the desired gear is introduced.

If a gear assigned to the shift rail 10 is to be introduced, the element 31 is moved out of the neutral position of all shift rails toward the left by means of the shift finger 51 until the area 67 of the sleeve 66 comes to rest against the pressure disk 62 and, via it, against the intermediate wall 56. In this position the extension 52 is located inside the cutout 43 of the shift rail 10, which is therefore selected. The opening 38 in the rib 36 is correspondingly displaced, so that the shift rail 10 is also unblocked. The other shift rails 7, 8, 9 are blocked. A Y-Y movement of the shift finger 51 causes the displacement of the shift rail 10 out of its neutral position and the introduction of the desired gear.

The cassette unit 11 contains the essential elements required for matching a defined actuation unit 5 to a provided standard transmission 1. Initially, the shape and size of the shift finger 51 are matched to the shape and size of the shift rails 7, 8, 9, 10 and their cutouts 43. In addition, the actuation forces in particular required in the transverse direction (X-X direction) can be set by the respective selection of an appropriate compression spring 61. The maximum traverse can furthermore be set by an appropriate selection of the sleeve 66. Finally, the characteristics of the spring biasing device 70 can be fixed. The desired shift patterns can be determined by an appropriate selection of the carrier member 47. If a long shift travel is acceptable, a carrier member 47 with a single extension for connecting the shift rail to be selected is sufficient. If short shift travels are desired, the carrier member 47 can be provided with two extensions 52, 53, as illustrated in Figs. 7 to 10. Thus, in the end matching the transmission 1 to various gear shifting mechanisms or gear shifting assemblies is limited to the exchange or provision of an appropriate cassette 11.

**Claims**

1. A gear shifting cassette unit (11) for shifting of gears in a change gear transmission (1), the transmission comprising at least two shift rails (7, 8; 9, 10) and a housing (4)
the cassette unit including:

a cassette housing (25) comprising
bearing means for movably supporting at least one shift element (53) for engaging and moving the shift rails and
mounting means (26) for fixedly securing the housing on the transmission housing (4) in a position where the at least one shift element can be moved to selectively engage connecting members (42, 43) of the shift rails (7, 8; 9, 10), said bearing means comprising:

a traversing member (31) located in the cassette housing (25) and moveable in a X-X direction for selecting a shift rail, and
a carrier member (47) supported by the traversing member (31) and moveable in a Y-Y direction for axially moving a selected one of the shift rails and being provided with the at least one shift element (53) at one side thereof, the carrier member (47) being provided with a coupling (49) for connecting the carrier member to a shift finger (51) in the X-X direction and in the Y-Y direction.

2. The gear shifting cassette unit according to claim 1, wherein the housing (25) of the cassette (11) comprises, as the mounting means (26), a flange (26) which is adapted to be clamped between a surface surrounding an opening (22) of the transmission housing (4) and a housing (5a) of an actuation unit for moving the shift finger (51) in said X-X direction and said Y-Y direction.

3. The gear shifting cassette unit according to claim 1 wherein the shift element (53) protrudes through an opening (50) provided in the cassette housing (25) for engaging the shift rails (7, 8).

4. The gear shifting cassette unit according to claim 1 wherein the traversing member (31) comprises two opposite guiding surfaces (44, 45) which are in sliding engagement with inner surfaces (34, 35) of the cassette housing facing each other.

5. The gear shifting cassette unit according to claim 4, wherein the traversing member (31) comprises an oblong opening (46) with the carrier member (47) located therein and movable in the Y-Y direction.

6. The gear shifting cassette unit according to claim 1, wherein a biasing device (70) is associated with the traversing member (31) .

7. The gear shifting cassette unit according to claim 6, wherein the biasing device (70) comprises at least one spring means urging the traversing member into a desired position.

8. The gear shifting cassette unit according to claim 7, wherein the spring means is a compression spring.

9. The gear shifting cassette unit according to claim 8, wherein the traversing member (31) comprises a shaft (54) extending in X-X direction and carrying the compression spring.

10. The gear shifting cassette unit according to claim 9, wherein the compression spring is clamped between two pressure disks (62, 63) located on the shaft between respective stop means (64, 65).

11. The gear shifting cassette unit according to claim 10, wherein the cassette housing comprises two abutment means (62, 63) for the spring means limiting the travel of the spring means (61) in opposite directions.

12. The gear shifting cassette unit according to claim 1, wherein a travel path limiting element is associated with the traversing member (31).

13. The gear shifting cassette unit according to claims 9 and 12, wherein the travel path limiting element (66) is a sleeve (66) located on the shaft (54).

14. The gear shifting cassette unit according to claim 4, wherein the traversing member (31) comprises a blocking member (36) for enabling the shift rail selected by the carrier member (47) to move in the Y-Y direction and for blocking all other shift rails (7, 8, 9, 10) in their neutral position

15. The gear shifting cassette unit according to claim 14, wherein the blocking member (36) extends in X-X direction and engages the shift rails (7, 8, 9, 10) for blocking them in Y-Y direction, and wherein the blocking member comprises at least one cutout for unblocking the shift rail (7, 8, 9, 10) that is in registration with the cutout.

16. The gear shifting cassette unit according to claim 14, wherein the cassette housing comprises a slit-like opening (37) and the blocking member (36) is extending therethrough.

17. The gear shifting cassette unit according to claim 14, wherein the blocking member (36) is a one piece unit with the traversing member.

18. The gear shifting cassette unit according to claim 1, wherein two shift elements (52, 53) having the shape of tongues (52, 53) are provided which extend into shift rail connecting members (42, 43) and being spaced apart in the X-X direction.

19. The gear shifting cassette unit according to claim 18, wherein a distance is provided between the tongues (52, 53), which distance is greater than the width of the connecting member in the X-X direction.

20. The gear shifting cassette unit according to claim 18, wherein at least three shift rails (7, 8, 9, 10) are provided, two of them arranged in close distance so that, if one tongue (52, 53) is in regular registration with the connecting element (42, 43) of the selected shift rail (7, 8, 9, 10), the other connecting element (42, 43) remains within the void between the tongues (52, 53).

21. The gear shifting cassette unit according to claim 20, wherein two of the shift rails (7, 8, 9, 10) are arranged in far distance so that, if one tongue is in regular registration with the connecting element of a selected shift rail, the other tongue is not in registration with the connecting element (42, 43) of the other shift rail (7, 8, 9, 10) .

22. The gear shifting cassette unit according to claim 1, wherein the housing (25) of the cassette (11) has an outer shape that fits into an opening (22) of the transmission.

23. A transmission having a gear shifting assembly including a gear shifting cassette unit according to at least one of claims 1 to 22 and a gear shifting mechanism (24) for shifting of gears in the transmission (1) comprising a transmission housing (4), said shifting mechanism (24) comprising an actuation unit (5) having a actuation unit housing (5a) to be mounted on the transmission housing (4), said actuation unit comprising a shift finger (51) movable in the axial Y-Y direction for axially moving a selected one of the shift rails (7, 8, 9, 10) and in the X-X direction for selecting a shift rail, the gear shifting assembly including:

   a cassette housing (25) having mounting means (26) for fixedly securing the housing (25) on the transmission housing (4) in a position where the shift elements (52, 53) can be moved to selectively engage the connecting members (42, 43) of the shift rails (7, 8, 9, 10), a traversing member (31) located on the cassette housing (4) and movable in the X-X direction, a carrier member (47) being supported by the traversing member (31) and movable in the Y-Y direction and being provided with the shift elements (52, 53) at one side thereof protruding through an opening (22) provided in the cassette housing and engaging with a shift rail connecting member (42, 43), the carrier member (47) being provided with a coupling (49) for connecting the carrier member (47) to the shift finger (51) in the X-X direction and the Y-Y direction.

**Patentansprüche**

1. Gangschaltkassetteneinheit (11) zum Schalten von Gängen in einem Gangwechselgetriebe (1), wobei das Getriebe wenigstens zwei Schaltstangen (7, 8; 9, 10) und ein Gehäuse (4) aufweist, wobei zu der Kassetteneinheit gehören:

   ein Kassettengehäuse, mit Lagermitteln zum beweglichen Lagern wenigstens eines Schaltelements (53), zum Ankoppeln an und bewegen von Schaltstangen, und Befestigungsmittel (26) zur festen Sicherung des Gehäuses an dem Getriebegehäuse (4) in einer Position, in der wenigstens ein Schaltelement bewegt werden kann, um wahlweise mit einem Verbindungselement (42, 43) der Schaltstangen (7, 8, 9, 10) in Eingriff zu kommen, wobei das Lagermittel aufweist:

   ein quer laufendes Element (31), das in dem Kassettengehäuse (25) angeordnet und in einer x-x-Richtung zur Auswahl einer Schaltstange beweglich ist, und ein Trägerelement (57), das von dem quer laufenden Element (31) getragen und in einer y-y-Richtung bewegbar ist, um eine aus den Schaltstangen ausgewählte Schaltstange zu bewegen, und das an seiner einen Seite mit wenigstens einem Schaltelement (53) versehen ist, wobei das Trägerelement (57) mit einer Kupplung (49) versehen ist, um das Trägerelement mit einem Schaltfinger (51) in der x-x-Richtung und in der y-y-Richtung zu verbinden.

2. Gangschaltkassetteneinheit nach Anspruch 1, wobei das Gehäuse (25) der Kassette (11) als Befestigungsmittel (26) einen Flansch (26) aufweist, der dazu eingerichtet ist, zwischen einer eine Öffnung (22) des Getriebegehäuses (4) umgebenden Fläche und einem Gehäuse (5a) einer Betätigungseinheit zur Betätigung des Schaltfingers (51) in der x-x-Richtung und der y-y-Richtung geklemmt zu werden.

3. Gangschaltkassetteneinheit nach Anspruch 1, wobei das Schaltelement (53) durch eine in dem Kassettengehäuse (25) ausgebildete Öffnung (50) ragt, um mit dem Schaltstangen (7, 8) in Eingriff zu kommen.

4. Gangschaltkassetteneinheit nach Anspruch 1, wobei das quer laufende Element (31) zwei einander gegenüberliegende Führungsflächen (44, 45) aufweist, die an Innenflächen (34, 35), die aufeinander zu weisen, gleitend gelagert sind.

5. Gangschaltkassetteneinheit nach Anspruch 4, wobei das quer laufende Element (31) eine längliche Öffnung (46) aufweist, in der ein Trägerelement (47) angeordnet und in y-y-Richtung beweglich ist.

6. Gangschaltkassetteneinheit nach Anspruch 1, wobei dem quer laufenden Element (31) eine Vorspanneinrichtung (70) zugeordnet ist.

7. Gangschaltkassetteneinheit nach Anspruch 6, wobei die Vorspanneinrichtung (70) wenigstens ein Federmittel aufweist, das das quer laufende Element in eine gewünschte Position drängt.

8. Gangschaltkassetteneinheit nach Anspruch 7, wobei das Federmittel eine Druckfeder ist.

9. Gangschaltkassetteneinheit nach Anspruch 8, wobei das quer laufende Element (31) eine Welle (54) aufweist, die sich in x-x-Richtung erstreckt und die Druckfeder trägt.

10. Gangschaltkassetteneinheit nach Anspruch 9, wobei die Druckfeder zwischen zwei Druckscheiben (62, 63) geklemmt ist, die auf der Welle zwischen entsprechenden Stoppmitteln (64, 65) angeordnet sind.

11. Gangschaltkassetteneinheit nach Anspruch 10, wobei das Kassettengehäuse zwei Anlagemittel (62, 63) für das Federmittel aufweist, die den Hub des Federmittels (61) in einander entgegen gesetzten Richtungen begrenzen.

12. Gangschaltkassetteneinheit nach Anspruch 1, wobei dem quer laufenden Element (31) ein den Bewegungsweg beschränkendes Element zugeordnet ist.

13. Gangschaltkassetteneinheit nach Anspruch 9 und 12, wobei das den Bewegungsweg beschränkende Element (66) eine auf der Welle (54) angeordnete Buchse (66) ist.

14. Gangschaltkassetteneinheit nach Anspruch 4, wobei das quer laufende Element (31) ein Sperrelement (36) aufweist, das der durch das Trägerelement (47) ausgewählten Schaltstange gestattet, sich in y-y-Richtung zu bewegen, und dass alle anderen Schaltstangen in ihrer Leerlaufposition (7, 8, 9, 10) blockiert.

15. Gangschaltkassetteneinheit nach Anspruch 14, wobei sich das Sperrelement (36) in x-x-Richtung erstreckt und mit den Schaltstangen (7, 8, 9, 10) in Eingriff steht, um diese in y-y-Richtung zu blockieren, und wobei das Sperrelement wenigstens eine Ausnehmung zur Freigabe der Schaltstange (7, 8, 9, 10) aufweist, die mit der Ausnehmung in Fluchtung steht.

16. Gangschaltkassetteneinheit nach Anspruch 14, wobei das Kassettengehäuse eine schlitzartige Öffnung (37) aufweist, durch die sich das Sperrelement (36) erstreckt.

17. Gangschaltkassetteneinheit nach Anspruch 14, wobei das Sperrelement (36) eine einstückige Einheit mit dem quer laufenden Element ist.

18. Gangschaltkassetteneinheit nach Anspruch 1, wobei zwei Schaltelemente (52, 53) vorgesehen sind, die die Form von Zungen (52, 53) haben, die sich in Schaltstangenverbindungselemente (42, 43) erstrecken und voneinander in der x-x-Richtung beabstandet sind.

19. Gangschaltkassetteneinheit nach Anspruch 18, wobei zwischen den Zungen (52, 53) ein Abstand vorgesehen ist, wobei der Abstand in der x-x-Richtung größer als die Breite des Verbindungselements ist.

20. Gangschaltkassetteneinheit nach Anspruch 18, wobei wenigstens drei Schaltstangen (7, 8, 9, 10) vorgesehen sind, wobei zwei von ihnen in engem Abstand angeordnet sind, sodass, wenn eine Zunge (52, 53) in normaler Fluchtung mit dem Verbindungselement (42, 43) der ausgewählten Schaltstange (7, 8, 9, 10) steht, das andere Verbindungselement (42, 43) in dem Zwischenraum zwischen den Zungen (52, 53) verbleibt.

21. Gangschaltkassetteneinheit nach Anspruch 20, wobei zwei der Schaltstangen (7, 8, 9, 10) in weitem Abstand angeordnet sind, so dass, wenn eine Zunge in normaler Fluchtung mit dem Verbindungselement einer ausgewählten Schaltstange steht, die andere Zunge nicht in Fluchtung mit dem Verbindungselement (42, 43) der anderen Schaltstange (7, 8, 9, 10) steht.

22. Gangschaltkassetteneinheit nach Anspruch 1, wobei das Gehäuse (25) der Kassette (11) eine Außenform aufweist, die in eine Öffnung (22) des Getriebes passt.

23. Getriebe mit einer Gangschaltanordnung, die eine Gangschaltkassette gemäß wenigstens eines der Ansprüche 1 bis 22 versehen ist und einen Gangschaltmechanismus (24) zum Schalten von Gängen in dem Getriebe (1) aufweist, das ein Getriebegehäuse (4) aufweist,
wobei der Schaltmechanismus (24) eine Betätigungseinheit (5) mit einem Betätigungseinheitsgehäuse (5a) umfasst, das an dem Getriebegehäuse (4) zu befestigen ist, wobei die Betätigungseinheit einen Schaltfinger (51) aufweist, der in der y-y-Richtung zur axialen Bewegung einer, aus den Schaltstangen (7, 8, 9, 10) ausgewählten Schaltstange und zur Auswahl einer Schaltstange in der x-x-Richtung bewegbar ist,
wobei die Gangschaltanordnung enthält:

ein Kassettengehäuse (25) mit Befestigungsmitteln (26) zur festen Sicherung des Gehäuses (25) an dem Getriebegehäuse (4) in einer Position, in der die Schaltelemente (52, 53) bewegt werden können, um mit den Verbindungselementen (42, 43) der Schaltstangen (7, 8, 9, 10) wahlweise in Eingriff zu kommen, wobei an dem Kassettengehäuse (4) ein quer laufendes Element (31) in x-x-Richtung beweglich gelagert ist, ein Trägerelement (47) das von dem quer laufenden Element (31) getragen und in y-y-Richtung bewegbar und mit den Schaltelementen (52, 53) an einer seiner Seiten versehe ist, die sich durch eine in dem Kassettengehäuse vorgesehene Öffnung erstrekken und mit einem Schaltstangenanschlusselement (42, 43) in Eingriff kommen, wobei das Trägerelement (47) mit einer Kupplung (49) zum Verbinden des Trägerelements (47) mit dem Finger (51) in x-x-Richtung und in y-y-Richtung versehen ist.

**Revendications**

1. Système de cassette de changement de vitesse (11) permettant le changement de vitesse dans une boîte de vitesses à pignons interchangeables (1), la boîte de vitesses comprenant au moins deux axes de fourchette (7, 8, 9, 10) et un carter (4)
le système de cassette incluant :

un carter de cassette (25) comprenant
un moyen de palier pour supporter de manière mobile au moins un élément de changement de vitesse (53) pour engager et déplacer les axes de fourchette et
un moyen de montage (26) pour fixer de manière définitive le carter sur le carter de boîte de vitesses (4) dans une position où l'au moins un élément de changement de vitesse peut être déplacé pour engager de manière sélective les éléments de raccordement (42, 43) des axes de fourchette (7, 8, 9, 10),
ledit moyen de palier comprenant :

un élément coulissant (31) installé dans le carter de cassette (25) et pouvant se déplacer dans une direction X-X permettant de sélectionner une axe de fourchette, et
un élément de support (47) supporté par l'élément coulissant (31) et pouvant se déplacer dans une direction Y-Y pour déplacer axialement un axe sélectionné parmi les axes de fourchette et prévu avec l'au moins un élément de changement de vitesse (53) sur un de ses côtés, l'élément de support (47) étant équipé d'un couplage (49) pour raccorder l'élément de support à un doigt de commande (51) dans la direction X-X et dans la direction Y-Y.

2. Système de cassette de changement de vitesse selon la revendication 1, dans lequel le carter (25) de la cassette (11) comprend, comme moyen de montage (26), une collerette (26) qui est adaptée pour être serrée entre une surface entourant une ouverture (22) du carter de boîte de vitesses (4) et un carter (5a) d'une unité d'actionnement pour déplacer le doigt de commande (51) dans ladite direction X-X et ladite direction Y-Y.

3. Système de cassette de changement de vitesse selon la revendication 1, dans lequel l'élément de changement de vitesse (53) fait saillie via une ouverture (50) prévue dans le carter de cassette (25) pour engager les axes de fourchette (7, 8).

4. Système de cassette de changement de vitesse selon la revendication 1, dans lequel l'élément coulissant (31) comprend deux surfaces de guidage opposées (44,45) qui sont en engagement coulissant avec les surfaces internes (34, 35) du carter de cassette et se font face.

5. Système de cassette de changement de vitesse selon la revendication 4, dans lequel l'élément coulissant (31) comprend une ouverture allongée (46) avec l'élément de support (47) situé à l'intérieur et pouvant se déplacer dans la direction Y-Y.

6. Système de cassette de changement de vitesse selon la revendication 1, dans lequel un dispositif de polarisation (70) est associé à l'élément coulissant (31).

7. Système de cassette de changement de vitesse selon la revendication 6, dans lequel le dispositif de polarisation (70) comprend au moins un moyen de ressort comprimant l'élément coulissant dans une position souhaitée.

8. Système de cassette de changement de vitesse selon la revendication 7, dans lequel le moyen de ressort est un ressort de compression.

9. Système de cassette de changement de vitesse selon la revendication 8, dans lequel l'élément coulissant (31) comprend un arbre (54) s'étendant dans la direction X-X et supportant le ressort de compression.

10. Système de cassette de changement de vitesse selon la revendication 9, dans lequel le ressort de compression est serré entre deux disques de pression (62, 63) situés sur l'arbre entre les moyens d'arrêt respectifs (64, 65).

11. Système de cassette de changement de vitesse selon la revendication 10, dans lequel le carter de cassette comprend deux moyens de butée (62, 63) pour le moyen de ressort limitant le déplacement du moyen de ressort (61) dans des directions opposées.

12. Système de cassette de changement de vitesse selon la revendication 1, dans lequel un élément limitant le parcours de déplacement est associé à l'élément coulissant (31).

13. Système de cassette de changement de vitesse selon les revendications 9 et 12, dans lequel l'élément limitant le parcours de déplacement (66) est un manchon (66) situé sur l'arbre (54).

14. Système de cassette de changement de vitesse selon la revendication 4, dans lequel l'élément coulissant (31) comprend un élément de blocage (36) pour permettre le déplacement dans la direction Y-Y de l'axe de fourchette sélectionné par l'élément de support (47) et pour bloquer tous les autres axes de fourchette (7, 8, 9, 10) dans leur position neutre.

15. Système de cassette de changement de vitesse selon la revendication 14, dans lequel l'élément de blocage (36) s'étend dans la direction X-X et engage les axes de fourchette (7, 8, 9, 10) pour les bloquer dans la direction Y-Y, et dans lequel l'élément de blocage comprend au moins une entaille pour débloquer l'axe de fourchette (7, 8, 9, 10) qui coïncide avec l'entaille.

16. Système de cassette de changement de vitesse selon la revendication 14, dans lequel le carter de cassette comprend une ouverture de type fente (37) et l'élément de blocage (36) la traverse.

17. Système de cassette de changement de vitesse selon la revendication 14, dans lequel l'élément de blocage (36) est une unité monobloc avec l'élément coulissant.

18. Système de cassette de changement de vitesse selon la revendication 1, dans lequel deux éléments de changement de vitesse (52, 53) en forme de languettes (52, 53) sont prévus pour traverser les éléments de raccordement des axes de fourchette (42, 43) et espacés dans la direction X-X.

19. Système de cassette de changement de vitesse selon la revendication 18, dans lequel une distance est prévue entre les languettes (52, 53), la distance étant supérieure à la largeur de l'élément de raccordement dans la direction X-X.

20. Système de cassette de changement de vitesse selon la revendication 18, dans lequel au moins trois axes de fourchette (7, 8, 9, 10) sont prévus, deux d'entre eux étant installés près l'un de l'autre de sorte que, si une languette (52, 53) coïncide bien avec l'élément de raccordement (42, 43) de l'axe de fourchette sélectionné (7, 8, 9, 10), l'autre élément de raccordement (42, 43) reste dans l'espace vide entre les languettes (52, 53).

21. Système de cassette de changement de vitesse selon la revendication 20, dans lequel deux des axes de fourchette (7, 8, 9, 10) sont installés à une certaines distance de sorte que, si une languette coïncide bien avec l'élément de raccordement d'un axe de fourchette sélectionné, l'autre languette ne coïncide pas avec l'élément de raccordement (42, 43) de l'autre axe de fourchette (7, 8, 9 10).

22. Système de cassette de changement de vitesse selon la revendication 1, dans lequel le carter (25) de la cassette (11) comporte une forme externe qui s'adapte dans une ouverture (22) de la boîte de vitesses.

23. Boîte de vitesses comportant un ensemble de changement de vitesse incluant un système de cassette de changement de vitesse selon au moins une des revendications 1 à 22 et un mécanisme de changement de vitesse (24) pour changer les vitesses de la boîte de vitesses (1) comprenant un carter de boîte de vitesses (4),
ledit mécanisme de changement de vitesse (24) comprenant une unité d'actionnement (5) comportant un carter d'unité d'actionnement (5a) à monter sur le carter de boîte de vitesses (4), ladite unité d'actionnement comprenant un doigt de commande (51) pouvant se déplacer dans la direction axiale Y-Y pour déplacer axialement un axe sélectionné parmi les axes de fourchette (7, 8, 9, 10) et dans la direction X-X permettant de sélectionner un axe de fourchette,
l'ensemble de changement de vitesse incluant :

 un carter de cassette (25) comprenant un moyen de montage (26) permettant de fixer de manière définitive le carter (25) sur le carter de boîte de vitesses (4) dans une position où les éléments de changement de vitesse (52, 53) peuvent être déplacés pour engager de manière sélective les éléments de raccordement (42, 43) des axes de fourchette (7, 8, 9, 10), un élément coulissant (31) situé sur le carter de cassette (4) et pouvant se déplacer dans la direction X-X,

un élément de support (47) étant supporté par l'élément coulissant (31) et pouvant se déplacer dans la direction Y-Y et étant équipé des éléments de changement de vitesse (52, 53) sur un de ses côtés faisant saillie via une ouverture (22) prévue dans le carter de cassette et s'engageant avec un élément de raccordement d'axe de fourchette (42, 43), l'élément de support (47) étant fourni avec un couplage (49) pour raccorder l'élément de support (47) au doigt de commande (51) dans la direction X-X et la direction Y-Y.

Fig.1

Fig.2

EP 1 468 211 B1

Fig.3

Fig.4

Fig.5

Fig.6

Fig.7

Fig.8

Fig.9

Fig.10

Fig.11

EP 1 468 211 B1